# FASCICULE DE BREVET EUROPEEN

(11) **EP 2 370 279 B1**
(45) Date de publication et mention de la délivrance du brevet: **28.11.2012**
(21) Numéro de dépôt: 09801502.7
(22) Date de dépôt: 07.12.2009
(51) Int. Cl.: B60H 1/00

(54) **DISPOSITIF POUR REFROIDIR LES BATTERIES D'UN VEHICULE NOTAMMENT ELECTRIQUE ET VEHICULE EQUIPE D'UN TEL DISPOSITIF**
VORRICHTUNG ZUM KÜHLEN DER BATTERIEN EINES FAHRZEUGS, INSBESONDERE EINES ELEKTROFAHRZEUGS, UND MIT SOLCH EINER VORRICHTUNG VERSEHENES FAHRZEUG
DEVICE FOR COOLING THE BATTERIES OF AN ESPECIALLY ELECTRIC VEHICLE AND VEHICLE PROVIDED WITH SUCH A DEVICE

(30) Priorité: 30.12.2008 FR 0859124
(43) Date de publication de la demande: 05.10.2011
(73) Titulaire: Renault S.A.S., 92100 Boulogne-Billancourt (FR)
(72) Inventeur: YU, Robert, F-78180 Montigny Le Bretonneux (FR); ORIGUCHI, Masato, F-78120 Rambouillet (FR); DUBIEF, Flavien, CH-2000 Neuchatel (CH)
(86) Numéro de dépôt international: PCT/FR2009/052422
(87) Numéro de publication internationale: WO 2010/076452

(56) Documents cités:
- EP-A- 0 596 778
- WO-A-03/015192
- WO-A-2009/062710
- DE-C1- 4 408 960

## Description

La présente invention concerne un dispositif pour refroidir la ou les batteries d'un véhicule automobile notamment électrique, du type hybride ou tout électrique.

Les véhicules à moteur électrique sont alimentés en énergie électrique par une batterie dont la durée de vie est primordiale compte tenu de son prix initial.

Ces batteries électrochimiques, très sensibles aux variations de température, sont généralement conçues pour fonctionner de manière optimale dans une gamme de température de 20 à 40°C, voire de 20 à 30°C.

Une température supérieure à 40°C permet d'améliorer les performances d'une batterie au lithium mais augmente sa vitesse de dégradation, une température de 40°C étant déjà élevée pour assurer une longue durée de vie.

Une température supérieure à 40°C pour une batterie de type NiMH (ou NiCd) affecte la capacité de charge de la batterie et accélère sa montée en température.

En raison de leur taille et poids relativement important (typiquement 15 à 20 kWh pour une batterie de 150 à 200 kg assurant une autonomie de 100 à 150 km), ces batteries montent lentement en température mais sont difficiles à refroidir.

La génération de chaleur étant proportionnelle au carré du courant électrique et la puissance étant proportionnelle au courant, la génération de chaleur est proportionnelle au carré de la puissance.

Une charge très rapide de la batterie (en une quinzaine de minutes) peut donc provoquer une génération de chaleur très importante dans la batterie.

Dans le cas d'un système de charge rapide de la batterie, le conducteur peut utiliser le véhicule plusieurs fois dans la même journée en chargeant rapidement la batterie après sa décharge complète suite à l'utilisation du véhicule.

Dans ce cas, la température de la batterie va augmenter de plus en plus jusqu'à atteindre la température autorisée maximale, la batterie n'ayant pas le temps de refroidir entre deux cycles de charge rapide de la batterie.

Il est alors nécessaire de refroidir la batterie afin de préserver sa durée de vie.

Le document US 5 834 132 propose un système de régulation de la température d'une batterie de véhicule automobile.

Ce système prévoit un circuit de refroidissement circulant entre les cellules de la batterie, ce circuit étant alimenté en fluide de refroidissement par un réservoir.

Une pompe est nécessaire pour assurer la circulation du fluide de refroidissement.

Le fluide est refroidi par l'air extérieur au moyen d'un radiateur et d'un ventilateur associé.

Toutefois, afin d'assurer un refroidissement efficace, les dimensions du radiateur et la capacité du ventilateur doivent être importantes, les différences de température entre l'air extérieur et le fluide et entre la batterie et le fluide étant relativement faibles.

Il en résulte un encombrement et un poids relativement important d'un tel système, qui de plus est complexe et coûteux en raison du circuit de refroidissement, de la pompe, du radiateur et du ventilateur de tailles importantes, des valves nécessaires.

En outre, un tel système n'est pas suffisamment efficace pour refroidir la batterie en cas de charges rapides successives en raison de la génération de chaleur très importante en un temps très court.

Un autre dispositif de refroidissement connu utilise pour refroidir la ou les batteries, le système de climatisation du véhicule.

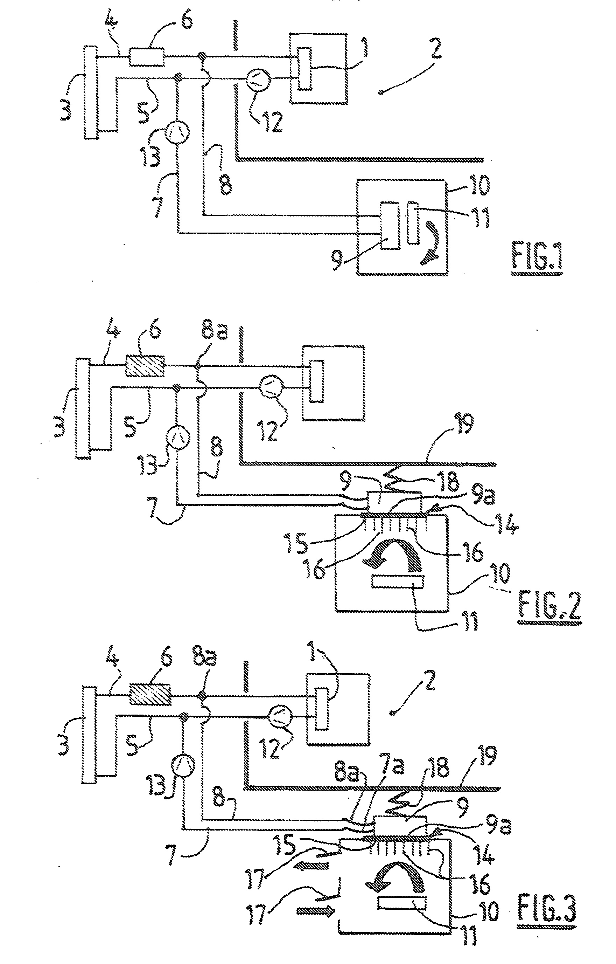

Ce dispositif équipe les véhicules du type Ford Escape et est schématisé sur la figure 1.

Ce dispositif comprend un évaporateur 1 situé dans l'habitacle 2 qui est relié au condenseur 3 situé à l'extérieur de l'habitacle par deux conduits 4, 5 dans lesquels circule un liquide frigorigène, tel que du fréon qui est comprimé dans un compresseur 6.

Les deux conduits 4, 5 sont reliés à deux conduits 7, 8 de dérivation qui sont reliés à un évaporateur 9 qui refroidit l'intérieur d'un bac 10 renfermant les batteries 11.

Les détenteurs 12, 13 permettent de régler la circulation du liquide frigorigène dans les conduits 4, 5 et 7, 8.

L'inconvénient de ce dispositif de refroidissement réside dans le fait que l'évaporateur 9 est situé dans le bac 10 qui renferme les batteries, ce qui augmente le volume de ce bac 10 et complique le raccordement entre l'évaporateur 9 et le circuit de dérivation du liquide frigorigène, ce qui pose des problèmes lorsque l'on veut enlever le bac 10 du véhicule. Un autre dispositif connu est divulgué par EP 05096778, qui constitue l'art antérieur le plus proche.

Le but de la présente invention est de remédier à ces inconvénients.

Ce but est atteint, selon l'invention, grâce à un dispositif pour refroidir la ou les batteries d'un véhicule automobile, en particulier d'un véhicule électrique, ce véhicule comprenant un climatiseur dans lequel l'évaporateur et le condenseur sont reliés entre eux par un circuit principal dans lequel circule un liquide frigorigène, ce circuit principal étant relié à un circuit de dérivation pour acheminer le liquide frigorigène vers un second évaporateur adapté pour refroidir la ou les batteries, contenues dans un bac, caractérisé en ce que ledit second évaporateur est situé à l'extérieur du bac et est en contact avec une partie thermiquement conductrice de ce bac, suivant la revendication 1.

Ainsi, le second évaporateur n'est pas situé à l'intérieur du bac contenant la ou les batteries et n'augmente pas le volume et le coût de fabrication de ce bac.

L'échange thermique entre le second évaporateur et l'intérieur du bac se fait par contact entre cet évaporateur et une partie thermiquement conductrice du bac qui refroidit l'intérieur du bac et donc les batteries.

De préférence, le second évaporateur comporte une surface de diffusion du froid, cette surface étant en contact direct avec ladite partie thermiquement conductrice.

Dans un mode de réalisation, ladite partie thermiquement conductrice est intégrée dans l'une des parois extérieures dudit bac.

L'une des faces de cette partie thermiquement conductrice peut être située dans le prolongement de l'une des faces de la paroi extérieure du bac.

Suivant l'invention, ladite partie thermiquement conductrice est un radiateur, ce qui permet de refroidir efficacement l'intérieur du bac.

Ce radiateur comporte une semelle métallique dont l'une des faces est en contact avec le second évaporateur et dont la face opposée porte des ailettes faisant saillie vers l'intérieur dudit bac.

Des moyens d'échange thermique par convection naturelle ou forcée peuvent être prévus entre les ailettes et la ou les batteries pour optimiser le refroidissement de celles-ci.

Dans une variante de réalisation, le dispositif de refroidissement peut comprendre des moyens d'échange thermique par conduction entre les ailettes du radiateur et la ou les batteries, ces moyens comprenant une structure métallique ou des caloducs.

Dans une autre variante de réalisation, au moins l'une des parois extérieures du bac contenant la ou les batteries comporte au moins un volet pouvant être ouvert pour mettre l'intérieur du bac en communication avec l'air ambiant.

Ces volets peuvent être ouverts, lorsque l'air ambiant est relativement froid, c'est-à-dire suffisamment froid pour refroidir la ou les batteries, sans utiliser la climatisation.

Selon un autre aspect, l'invention concerne un véhicule automobile, notamment un véhicule électrique, équipé du dispositif de refroidissement précité.

De préférence, le bac contenant la ou les batteries est fixé de façon amovible dans le véhicule, le second évaporateur étant en contact avec ladite partie thermiquement conductrice du bac grâce à la force exercée par un ressort, le circuit de dérivation du liquide frigorigène étant relié au second évaporateur par des conduits souples.

Ces conduites souples peuvent ainsi suivre le mouvement du bac contenant la ou les batteries.

D'autres particularités et avantages de l'invention apparaîtront encore tout au long de la description ci-après.

Aux dessins annexés, donnés à titre d'exemples, non limitatifs :
- la figure 2 est un schéma analogue à celui de la figure 1 concernant un dispositif de refroidissement de batterie selon l'invention,
- la figure 3 est un schéma analogue à celui de la figure 2 montrant un perfectionnement de l'invention.

Sur les schémas des figures 2 et 3, les éléments identiques à ceux du dispositif de refroidissement connu de la figure 1 portent les mêmes références numériques.

Dans les réalisations représentées sur les figures 2 et 3 le dispositif pour refroidir la batterie 11 d'un véhicule automobile, en particulier d'un véhicule électrique, comprend un climatiseur dans lequel l'évaporateur 1 et le condenseur 3 sont reliés entre eux par un circuit principal 4, 5 et un détenteur 12 un liquide frigorigène.

Ce circuit principal 4, 5 est relié à un circuit de dérivation 7, 8 pour acheminer le liquide frigorigène vers un second évaporateur 9 adapté pour refroidir la batterie 11, contenue dans un bac 10.

Selon l'invention, le second évaporateur 9 est situé à l'extérieur du bac 10 et en contact avec une partie thermiquement conductrice 14 de ce bac 10.

A cet effet, le second évaporateur 9 comporte une surface 9a de diffusion du froid qui est en contact direct avec la partie thermiquement conductrice 14.

Cette partie thermiquement conductrice 14 est intégrée de façon étanche dans l'une des parois extérieures du bac 10, de façon à être située sensiblement dans le prolongement de cette paroi.

Dans l'exemple représenté sur les figures 2 et 3, la partie thermiquement conductrice 14 est un radiateur.

Ce radiateur comporte une semelle métallique 15 dont l'une des faces est en contact avec le second évaporateur 9 et dont la face opposée porte des ailettes 16 faisant saillie vers l'intérieur du bac 10.

L'échange thermique entre les ailettes 16 du radiateur 14 et la batterie est réalisé par convection naturelle ou forcée au moyen d'un ventilateur de l'air contenu dans le bac 11.

Cet échange thermique peut également être réalisé par conduction entre les ailettes 16 du radiateur 14 et la batterie 11 au moyen d'une structure métallique ou des caloducs.

Dans l'exemple de la figure 3, l'une des parois extérieures du bac 10 contenant la batterie 11 comporte des volets 17 pouvant être ouverts pour mettre l'intérieur du bac 10 en communication avec l'air ambiant, lorsque la température extérieure est suffisamment basse pour refroidir la batterie 11.

Par ailleurs, le bac 10 contenant la batterie 11 est fixé de façon amovible dans le véhicule pour pouvoir enlever le bac 10 et le remettre en place.

A cet effet, le second évaporateur 9 est en contact avec la partie thermiquement conductrice 14 c'est-à-dire la semelle du radiateur grâce à la force exercée par un ressort 18 qui est en appui contre une paroi fixe, telle que le plancher 19 du véhicule.

Dans ce cas, le circuit de dérivation 7, 8 est raccordé au second évaporateur 9 par des conduites souples 7a, 8a qui peuvent suivre le mouvement du bac 10.

A cet effet, le bac 10 peut être guidé par des glissières ou analogues.

On va maintenant expliquer, en référence à la figure 3, le fonctionnement du dispositif de refroidissement selon l'invention.

Lorsque les détenteurs 12 et 13 du circuit principal 4, 5 et du circuit dérivé 7, 8 sont ouverts, le liquide frigorigène, tel que du fréon circule dans l'évaporateur 1 et dans l'évaporateur 9, ce qui a pour effet de refroidir l'habitacle 2 et le radiateur 14 dont les ailettes 16 font saillie dans le bac 10 contenant la batterie 11.

Les ailettes 16 refroidissent l'air contenu dans le bac 10 qui, par convection naturelle ou forcée au moyen d'un ventilateur, refroidit la batterie 11.

Le dispositif de refroidissement permet ainsi d'éviter que la température des batteries dépasse une température de l'ordre de 40°C, tout en permettant de refroidir l'habitacle 2 lors de la circulation du véhicule.

Lorsque le véhicule est à l'arrêt, le dispositif permet également de refroidir efficacement les batteries 11 lors d'un cycle de recharge rapide de celles-ci.

Dans ce cas, il suffit de faire tourner le moteur du véhicule pour entraîner le compresseur 6 et de fermer la vanne 8a du circuit principal pour éviter de refroidir inutilement l'habitacle 2.

Lorsque la température ambiante est suffisamment basse, on peut ouvrir les volets 17 du bac 10 et arrêter la climatisation.

Dans ce cas en effet, l'air ambiant est suffisamment froid pour refroidir la batterie 11.

## Revendications

1. Dispositif pour refroidir la ou les batteries (11) d'un véhicule automobile, en particulier d'un véhicule électrique, ce véhicule comprenant un climatiseur dans lequel l'évaporateur (1) et le condenseur (3) sont reliés entre eux par un circuit principal (4, 5) dans lequel circule un liquide frigorigène, ce circuit principal (4, 5) étant relié à un circuit de dérivation (7, 8) pour acheminer le liquide frigorigène vers un second évaporateur (9) adapté pour refroidir la ou
les batteries (11), contenues dans un bac (10), **caractérisé en ce que** ledit second évaporateur (9) est situé à l'extérieur du bac (10) et est en contact avec une partie thermiquement conductrice (14) de ce bac (10), ladite partie thermiquement conductrice (14) étant un radiateur comportant une semelle métallique (15) dont l'une des faces est en contact avec le second évaporateur (9) et dont la face opposée porte des ailettes (16) faisant saillie vers l'intérieur dudit bac (10).

2. Dispositif selon la revendication 1, **caractérisé en ce que** le second évaporateur (9) comporte une surface (9a) de diffusion du froid,
cette surface (9a) étant en contact direct avec ladite partie thermiquement conductrice (14).

3. Dispositif selon la revendication 2, **caractérisé en ce que** ladite partie thermiquement conductrice (14) est intégrée dans l'une des parois extérieures dudit bac (10).

4. Dispositif selon la revendication 1, **caractérisé en ce qu'**il comprend des moyens d'échange thermique par convection entre les ailettes (16) du radiateur (14) et la ou les batteries (11).

5. Dispositif selon la revendication 1, **caractérisé en ce qu'**il comprend des moyens d'échange thermique par conduction entre les ailettes (16) du radiateur (14) et la ou les batteries (11), ces moyens comprenant une structure métallique ou des caloducs.

6. Dispositif selon l'une des revendications 1 à 5, **caractérisé en ce qu'**au moins l'une des parois extérieures du bac (10) contenant la ou
les batteries (11) comporte au moins un volet (17) pouvant être ouvert pour mettre l'intérieur du bac (10) en communication avec l'air ambiant.

7. Véhicule automobile, notamment véhicule électrique, équipé d'un dispositif de refroidissement selon l'une des revendications 1 à 6.

8. Véhicule automobile selon la revendication 7, **caractérisé en ce que** le bac (10) contenant la ou les batteries (11) est fixé de façon amovible dans le véhicule, le second évaporateur (9) étant en contact avec ladite partie thermiquement conductrice (14) du bac (10) grâce à la force exercée par un ressort (18), le circuit de dérivation (7, 8) du liquide frigorigène étant relié au second évaporateur par des conduits souples (7a, 8a).

## Claims

1. Device for cooling the battery or batteries (11) of a motor vehicle, in particular of an electric vehicle, this vehicle comprising an air conditioner in which the evaporator (1) and the condenser (3) are connected together by a main circuit (4, 5) in which a coolant flows, this main circuit (4, 5) being connected to a branch circuit (7, 8) in order to convey the coolant to a second evaporator (9) suitable for cooling the battery or batteries (11) contained in a casing (10), **characterized in that** said second evaporator (9) is situated outside the casing (10) and is in contact with a thermally conductive portion (14) of this casing (10), said thermally conductive portion (14) being a radiator comprising a metal base (15) of which one of the faces is in contact with the second evaporator (9) and of which the opposite face supports fins (16) protruding toward the inside of said casing (10).

2. Device according to Claim 1, **characterized in that** the second evaporator (9) comprises a surface (9a) for diffusing the cold, this surface (9a) being in direct contact with said thermally conductive portion (14).

3. Device according to Claim 2, **characterized in that** said thermally conductive portion (14) is incorporated into one of the outer walls of said casing (10).

4. Device according to Claim 1, **characterized in that** it comprises heat exchange means by convection between the fins (16) of the radiator (14) and the battery or batteries (11).

5. Device according to Claim 1, **characterized in that** it comprises heat exchange means for heat exchange by conduction between the fins (16) of the radiator (14) and the battery or batteries (11), these means comprising a metal structure or heat pipes.

6. Device according to one of Claims 1 to 5, **characterized in that** at least one of the outer walls of the casing (10) containing the battery or batteries (11) comprises at least one flap (17) that can be opened to place the inside of the casing (10) in communication with the ambient air.

7. Motor vehicle, notably an electric vehicle, fitted with a cooling device according to one of Claims 1 to 6.

8. Motor vehicle according to Claim 7, **characterized in that** the casing (10) containing the battery or batteries (11) is removably fixed in the vehicle, the second evaporator (9) being in contact with said thermally conductive portion (14) of the casing (10) by virtue of the force exerted by a spring (18), the branch circuit (7, 8) of the coolant being connected to the second evaporator via flexible ducts (7a, 8a).

## Patentansprüche

1. Vorrichtung zum Kühlen der Batterie oder der Batterien (11) eines Kraftfahrzeugs, insbesondere eines Elektrofahrzeugs, wobei dieses Fahrzeug ein Klimagerät enthält, in dem der Verdampfer (1) und der Kondensator (3) durch einen Hauptkreislauf (4, 5), in dem eine Kühlflüssigkeit fließt, miteinander verbunden sind, wobei dieser Hauptkreislauf (4, 5) mit einem Ableitungskreislauf (7, 8) verbunden ist, um die Kühlflüssigkeit zu einem zweiten Verdampfer (9) zu transportieren, der geeignet ist, um die Batterie oder die Batterien (11) zu kühlen, die in einem Behälter (10) enthalten sind, **dadurch gekennzeichnet, dass** der zweite Verdampfer (9) sich außerhalb des Behälters (10) befindet und mit einem thermisch leitenden Teil (14) dieses Behälters (10) in Kontakt ist, wobei der thermisch leitende Teil (14) ein Kühler ist, der eine metallische Platte (15) aufweist, von der eine Seite mit dem zweiten Verdampfer (9) in Kontakt ist und deren entgegengesetzte Seite Rippen (16) trägt, die zur Innenseite des Behälters (10) vorstehen.

2. Vorrichtung nach Anspruch 1, **dadurch gekennzeichnet, dass** der zweite Verdampfer (9) eine Fläche (9a) zur Verteilung der Kälte enthält, wobei diese Fläche (9a) in direktem Kontakt mit dem thermisch leitenden Teil (14) ist.

3. Vorrichtung nach Anspruch 2, **dadurch gekennzeichnet, dass** der thermisch leitende Teil (14) in eine der Außenwände des Behälters (10) integriert ist.

4. Vorrichtung nach Anspruch 1, **dadurch gekennzeichnet, dass** sie Wärmetauschereinrichtungen durch Konvektion zwischen den Rippen (16) des Kühlers (14) und der Batterie oder den Batterien (11) enthält.

5. Vorrichtung nach Anspruch 1, **dadurch gekennzeichnet, dass** sie Wärmetauschereinrichtungen durch Leitung zwischen den Rippen (16) des Kühlers (14) und der Batterie oder den Batterien (11) enthält, wobei diese Einrichtungen eine metallische Struktur oder Wärmeleitrohre enthalten.

6. Vorrichtung nach einem der Ansprüche 1 bis 5, **dadurch gekennzeichnet, dass** mindestens eine der Außenwände des die Batterie oder die Batterien (11) enthaltenden Behälters (10) mindestens eine Klappe (17) aufweist, die geöffnet werden kann, um das Innere des Behälters (10) mit der Umgebungsluft in Verbindung zu setzen.

7. Kraftfahrzeug, insbesondere Elektrofahrzeug, das mit einer Kühlvorrichtung nach einem der Ansprüche 1 bis 6 ausgestattet ist.

8. Kraftfahrzeug nach Anspruch 7, **dadurch gekennzeichnet, dass** der die Batterie oder die Batterien (11) enthaltende Behälter (10) lösbar im Fahrzeug befestigt ist, wobei der zweite Verdampfer (9) mit dem thermisch leitenden Teil (14) des Behälters (10) aufgrund der von einer Feder (18) ausgeübten Kraft in Kontakt ist, wobei der Ableitungskreislauf (7, 8) der Kühlflüssigkeit mit dem zweiten Verdampfer durch flexible Rohre (7a, 8a) verbunden ist.
